# EUROPÄISCHE PATENTSCHRIFT

(11) **EP 2 878 029 B1**
(45) Veröffentlichungstag und Bekanntmachung des Hinweises auf die Patenterteilung: **20.11.2019**
(21) Anmeldenummer: 13728710.8
(22) Anmeldetag: 06.06.2013
(51) Int. Cl.: H01M 8/04119, H01M 8/04

(54) **BEFEUCHTUNGSEINRICHTUNG ZUR BEFEUCHTUNG VON PROZESSGASEN SOWIE BRENNSTOFFZELLENANORDNUNG UMFASSEND EINE SOLCHE**
HUMIDIFICATION DEVICE FOR HUMIDIFYING PROCESS GASES AND FUEL CELL ARRANGEMENT COMPRISING SAME
DISPOSITIF D'HUMIDIFICATION DE GAZ DE PROCESS ET SYSTÈME DE PILE À COMBUSTIBLE LE CONTENANT

(30) Priorität: 25.07.2012 DE 102012014723
(43) Veröffentlichungstag der Anmeldung: 03.06.2015
(73) Patentinhaber: AUDI AG, 85045 Ingolstadt (DE)
(72) Erfinder: PURMANN, Mathias, 39114 Magdeburg (DE); BRANDAU, Nils, 38120 Braunschweig (DE)
(86) Internationale Anmeldenummer: PCT/EP2013/061692
(87) Internationale Veröffentlichungsnummer: WO 2014/016030

(56) Entgegenhaltungen:
- DE-A1-102007 029 596
- DE-A1-102008 050 507
- DE-A1-102009 034 095
- DE-A1-102012 218 303

## Beschreibung

Die Erfindung betrifft eine Befeuchtungseinrichtung zur Befeuchtung von Prozessgasen, insbesondere für Brennstoffzellen, sowie eine Brennstoffzellenanordnung, die eine solche Befeuchtungseinrichtung umfasst.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die so genannte Membran-Elektroden-Einheit (MEA für membrane electrode assembly), die ein Verbund aus einer protonenleitenden Membran und zwei sandwichartig die Membran einschließenden Elektroden (Anode und Kathode) ist. In der Regel wird die Brennstoffzelle durch eine Vielzahl, im Stapel (stack) angeordneter MEA gebildet, deren elektrische Leistungen sich addieren. Im Betrieb der Brennstoffzelle wird der Brennstoff, insbesondere Wasserstoff H₂ oder ein wasserstoffhaltiges Gasgemisch, der Anode zugeführt, wo eine elektrochemische Oxidation unter Abgabe von Elektronen stattfindet (z. B. H₂ → 2 H⁺ + 2 e⁻). Über die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über einem elektrischen Stromkreis der Kathode zugeleitet. Der Kathode wird außerdem Sauerstoff oder ein sauerstoffhaltiges Gasgemisch zugeführt, so dass eine Reduktion von Sauerstoff unter Aufnahme der Elektronen stattfindet (1/2 O₂ + 2 e⁻ → O²⁻). Gleichzeitig reagieren im Kathodenraum die gebildeten Sauerstoffanionen mit den über die Membran transportierten Protonen unter Bildung von Wasser (O²⁻ + 2 H⁺ → H₂O). Durch die direkte Umsetzung von chemischer in elektrische Energie erzielen Brennstoffzellen gegenüber anderen Elektrizitätsgeneratoren aufgrund der Umgehung des Carnot-Faktors einen verbesserten Wirkungsgrad.

Ein Fokus der aktuellen Brennstoffzellenentwicklung ist insbesondere auf Traktionsanwendungen zum Antrieb von Kraftfahrzeugen gerichtet. Die derzeit am weitesten entwickelte Brennstoffzellentechnologie basiert auf Polymerelektrolytmembranen (PEM), bei denen die Membran aus einem befeuchteten Polyelektrolyt (z. B. Nafion®) gebildet wird und die wassergebundene elektrolytische Leitung über hydratisierte Protonen stattfindet. Derartige Polymerelektrolytmembranen sind zur Protonenleitung auf das Vorhandensein von Wasser angewiesen. Unterhalb einer gewissen Temperatur kann hierfür das kathodisch gebildete Produktwasser als Feuchtigkeitsquelle zur Befeuchtung der Membran noch ausreichend sein. Bei höheren Temperaturen hingegen wird jedoch zunehmend Feuchtigkeit aus dem Brennstoffzellenstapel mit dem Kathodenabgas ausgetragen. Um hier einer Austrocknung der Brennstoffzellen-Membran entgegenzuwirken, muss der Feuchtigkeitsaustrag durch aktive Zuführung von Wasser kompensiert werden.

WO 98/45889 A1 beschreibt eine Brennstoffzelle mit interner Wasserzuführung, bei der sowohl dem Brenngas im Anodenbereich als auch der Luft im Kathodenbereich Wasser in Form eines Aerosols zugegeben wird. Die Einbringung erfolgt über die Kanäle der jeweiligen Bipolarplatte.

Zudem ist aus DE 11 2005 000 819 bekannt, Gasdiffusionsmedien innerhalb der Brennstoffzelle vorzusehen, welche hydrophobe und auch hydrophile Eigenschaften oder Bereiche aufweisen und somit den Wasserhaushalt der Zelle durch geeignete Feuchtigkeitszu- und abführung ausgleichen.

Des Weiteren ist bekannt, externe Befeuchtungseinrichtungen einzusetzen, um das der Brennstoffzelle zuzuführende Prozessgas, zumeist die den Kathodenräumen zuzuführende Luft, zu befeuchten. Dabei wird insbesondere ein Teil der aus dem Stapel mit der Abluft der Kathodenräume ausgetragenen Feuchtigkeit rückgeführt. Die Strategie der Feuchtigkeitsrückführung wird für PEM-Brennstoffzellen entweder im Wege der Diffusion von Wasser über wasserdampfpermeablen Membranen realisiert und/oder nach dem Kapillarprinzip durch feinste Kanäle einer porösen Schicht. Für das Diffusions- als auch das Kapillarprinzip eignen sich so genannte Hohlfasermodule. Membranbefeuchter nutzen das durch die Brennstoffzellenreaktion an der Kathode gebildete Produktwasser unter Verwendung einer wasserdampfpermeablen Membran, um das der Brennstoffzelle zuzuführende Prozessgas zu befeuchten. Auf diese Weise wird nicht nur die Austrocknung der Membran verhindert, sondern auch eine übermäßige Ansammlung von Wasser in der Brennstoffzelle.

US 2008/0241636 A1 (DE 10 2008 016 087 A1) beschreibt einen solchen Membranbefeuchter, der nach dem Prinzip eines Gegenstromwärmetauschers ausgebildet ist, wobei ein wasserdampfreiches Gas durch Leitungen geführt wird, die von einem Gehäuse, durch das das zu befeuchtende Gasgemisch im Gegenstrom strömt, eingeschlossen werden. Die Leitungen bestehen aus einem wasserdampfdurchlässigen Membranmaterial.

Aus DE 10 2009 005 685 A1 ist eine externe Membran-Befeuchtungseinrichtung bekannt, die einen Stapel von Wellplatten mit jeweils einer dazwischen angeordneten Membran aufweist. Durch die Wellplatten werden Strömungskanäle ausgebildet, welche teilweise von dem relativ feuchten Kathodenabgas und teilweise von der zu befeuchtenden Kathodenluft durchströmt werden. Die Membran ist beidseitig von jeweils einer Schicht eines hydrophilen Diffusionsmediums kontaktiert, das einerseits das Wasser aufnehmen und zur bzw. von der Membran transportieren soll und andererseits die Membran strukturell abstützen soll.

US 2009/0092863 A (DE 10 2008 050 507 A1) beschreibt einen Membranbefeuchter, der einen Stapel abwechselnder Nassplatten (*wet plates*) und Trockenplatten (*dry plates*) aufweist, zwischen denen jeweils eine wasserdampfpermeable Membran angeordnet ist. Jede Nass- und Trockenplatte besteht aus zwei Gasdiffusionsschichten, zwischen denen Stege angeordnet sind, die Strömungskanäle begrenzen. Die Strömungskanäle der Nassplatte führen feuchte Abluft von der Kathodenseite der Brennstoffzelle und die Strömungskanale der Trockenplatte führen relativ trockenes Prozessgas, welches der Brennstoffzelle zugeführt wird. Die Platten sind seitlich durch massive Kunststoffleisten abgedichtet.

Die in US 2008/0001313 A1 offenbarten Membranbefeuchter entsprechen dem zuvor beschriebenen, weisen jedoch andere Kanalstrukturen auf. Statt durch Stege, werden hier die Kanäle der Nass- und Trockenplatten durch Platten mit Wellblechstruktur oder durch Platten mit beidseitigen Nuten erzeugt.

Den bekannten externen Befeuchtungseinrichtungen für Brennstoffzellen unter Verwendung von wasserdampfpermeablen Membranen ist gemein, dass die Membrane stets beidseitig durch Schichten eines Diffusionsmediums, insbesondere eines Vlieses aus Glasfasern oder einem Kunststoff, z. B. Polyetherketon (PEEK), Polyetherimid (PEI) oder Polysulfon (PSU), eingeschlossen ist. Den Diffusionsschichten kommen Transportfunktionen für den Wasserdampf im Wege der Konvektion zu sowie eine Stützfunktion für die Membran. Nachteilig an der Verwendung von solchen Diffusionsschichten in Form von Vliesen ist einerseits die relativ große Schichtdicke der Vliese, die typischerweise im Bereich von 200 µm liegt. Aufgrund der hohen Anzahl der in einer Befeuchtungseinrichtung vorhandenen Diffusionsschichten führt dies einerseits zu langen Strömungswegen durch die Diffusionsschicht sowie andererseits zu einem hohen Bauraumbedarf, der insbesondere in Fahrzeugen oft nicht gegeben ist. Darüber hinaus verfügen Vliese über eine relativ geringe freie Fläche von typischerweise weniger als 50 %, was zu einer reduzierten Wassertransportrate führt.

Aus DE 10 2009 34 095 A1 ist eine externen Membran-Befeuchtungseinrichtung bekannt, bei der die Membran beidseitig durch Träger abgestützt ist. Jedoch weist diese Befeuchtungseinrichtung einen komplexen, aufwendig herstellbaren Aufbau auf.

Der Erfindung liegt nun die Aufgabe zugrunde, eine Befeuchtungseinrichtung zur Befeuchtung von Prozessgasen insbesondere von Brennstoffzellen vorzuschlagen, welche bei relativ geringem Bauraumbedarf eine hohe Feuchtigkeitsübertragungsrate auf das zu befeuchtende Prozessgas gewährleistet und dennoch einen vergleichsweise einfachen Aufbau aufweist, so dass ihre Herstellung vereinfacht wird.

Diese Aufgabe wird durch eine Befeuchtungseinrichtung zur Befeuchtung von Prozessgasen sowie eine Brennstoffzellenanordnung, die eine solche umfasst, mit den Merkmalen der unabhängigen Ansprüche gelöst.

Die erfindungsgemäße Befeuchtungseinrichtung umfasst einen Stapel sich wiederholender Komponenten, umfassend:
a) eine wasserdampfpermeable erste Membran,
b) eine, auf einer ersten Seite der ersten Membran angeordnete erste Schichtanordnung, umfassend
   b1) eine erste Strömungsschicht zur Leitung eines zu befeuchtenden Prozessgases, umfassend eine Vielzahl parallel zur ersten Membran verlaufender Strömungskanäle,
c) eine, auf einer zweiten Seite der ersten Membran angeordnete zweite Schichtanordnung, umfassend
   c1) eine zweite Strömungsschicht zur Leitung eines Feuchtgases, umfassend eine Vielzahl parallel zur ersten Membran verlaufender Strömungskanäle, sowie
   c2) zwei, beidseitig an die zweite Strömungsschicht anschließende Stützfolien, die in einem Zentralbereich eine Vielzahl an Durchgangsöffnungen aufweisen, sowie
d) eine wasserdampfpermeable zweite Membran, die auf der der ersten Membran abgewandten Seite der zweiten Schichtanordnung angeordnet ist.

Erfindungsgemäß schließen die Stützfolien mit ihrem äußeren Umfang jeweils mit einem äußeren Umfang der zweiten Strömungsschicht und der Membranen ab.

Dabei wird mit dem Begriff "wasserdampfpermeable Membran" eine Membran verstanden, die für gasförmiges Wasser (Heißdampf) und/oder teilkondensiertes Wasser (Nassdampf) durchlässig ist. Gleichzeitig sollte die Membran für andere Gasbestandteile möglichst undurchlässig sein, das heißt für Wasserdampf möglichst selektiv permeabel sein. Geeignete Materialien umfassen hydrophile Polymere und Polymerkomposite, beispielsweise Polyperfluorsulfonsäure (sulfoniertes Tetrafluorethylen-Polymer), die etwa unter der Handelsbezeichnung Nafion ® erhältlich ist.

Der Begriff "Prozessgas" bezeichnet ein relativ wasserdampfarmes (trockenes) Gas oder Gasgemisch, beispielsweise ein der Kathode einer Brennstoffzelle zuzuführendes Gas oder Gasgemisch, insbesondere Sauerstoff oder ein sauerstoffhaltiges Gasgemisch wie Luft, und/oder ein der Anode zuzuführendes Gas oder Gasgemisch, insbesondere Wasserstoff oder ein wasserstoffhaltiges Gasgemisch.

Des Weiteren bezeichnet der Begriff "Feuchtgas" ein relativ wasserdampfreiches Gas oder Gasgemisch, dessen Feuchtigkeitsgehalt größer als der des Prozessgases ist. Insbesondere handelt es sich bei dem Feuchtgas um ein aus dem Kathoden- und/oder den Anodenraum einer Brennstoffzelle abgeführtes, relativ wasserdampfreiches (feuchtes) Gas oder Gasgemisch.

Bei den den Stapel aufbauenden Komponenten, Membran, Strömungsschicht, Stützfolie und Abstandshalterfolie, handelt es sich um flächige Bauteile, insbesondere Folien oder Platten, bei denen die Abmessungen ihrer zwei Hauptflächen um zumindest einer Größenordnung, insbesondere zumindest zwei Größenordnungen größer sind als die der vier schmalen Kantenflächen. Somit wird unter aneinander anschließenden Schichten verstanden, dass diese betreffenden Schichten mit ihren Hauptflächen aneinander anschließen. Dabei können die Komponenten unmittelbar, ohne weitere Zwischenschicht aneinander anschließen oder mittelbar, durch eine oder mehrere Zwischenschichten voneinander getrennt, beispielsweise durch eine Klebeschicht.

Nachfolgend wird die erste Schichtanordnung entsprechend des darin geführten relativ trockenen Prozessgases auch als Trockenschichtanordnung ("dry plate") und die zweite Schichtanordnung entsprechend des darin geführten relativ feuchten Feuchtgases auch als Feuchtschichtanordnung ("wet plate") bezeichnet.

Die Komponenten, umfassend wasserdampfpermeable Membran, erste Schichtanordnung sowie zweite Schichtanordnung, bilden Struktureinheiten aus. Eine Vielzahl dieser Struktureinheiten wiederholen sich im erfindungsgemäßen Stapel, der - in einem geeigneten Gehäuse angeordnet - die Kernkomponente des brennstoffzellenexternen Prozessgasbefeuchters darstellt.

Die Stapelung der Komponenten erfolgt vorzugsweise so, dass zwischen jeweils einem Paar Trocken- und Feuchtschichtanordnung jeweils eine Membranschicht angeordnet ist, um die Diffusion von Wasserdampf aus dem Feuchtgas in das Prozessgas zu ermöglichen, möglichst ohne einen Austausch anderer Gaskomponenten in Kauf zu nehmen. Beispielsweise umfasst der Stapel folgende Komponentenabfolge:
b) erste Schichtanordnung (Trockenschichtanordnung)
a) Membran
c) zweite Schichtanordnung (Feuchtschichtanordnung)
a) Membran
b) erste Schichtanordnung (Trockenschichtanordnung)
a) Membran
c) zweite Schichtanordnung (Feuchtschichtanordnung)
a) Membran
a) Membran und
c) zweite Schichtanordnung (Feuchtschichtanordnung).

Erfindungsgemäß wird somit die im Stand der Technik übliche Diffusionsschicht in Form eines Vlieses zumindest auf der Feuchtseite der Membran, bei welcher es sich in der Regel um die Niederdruckseite handelt, durch eine Stützfolie mit einer Vielzahl an Durchgangsöffnungen ersetzt. Der Stützfolie kommt somit die Aufgabe zu, die Membran auf ihrer Niederdruckseite mechanisch abzustützen, um ihre Auswölbung in Richtung der Niederdruckseite zu verhindern. Andererseits muss die Stützfolie einen ausreichenden Gasfluss des Feuchtgases zur Membran ermöglichen. Durch den Ersatz des Vlieses durch die Stützfolie wird der Weg des Feuchtgases zur Membran erheblich verkürzt und zudem die strömungsbremsende Wirkung des Vlieses umgangen. Weiterhin kann durch eine verstärkte Bewegung des Feuchtgases in der Nähe der Membran der Feuchtigkeitstransport von dem Feuchtgas zur Membranoberfläche gezielt beeinflusst werden. Die Strömungsgeschwindigkeiten können so gewählt werden, dass Turbulenzen in den Strömungskanälen auftreten und zu einer Verbesserung des Feuchtigkeitstransports führen.

Ein weiterer Vorteil der Verwendung der Stützfolie besteht in der weitgehenden Inkompressibilität und Stabilität einer Folie. Somit kann eine Einwölbung der Stützfolie in Richtung der Niederdruckseite weitestgehend vermieden werden. Durch die damit erreichte stabile Kanalgeometrie können zudem Druckverluste klein gehalten und genau vorhergesagt werden. Die Vorhersage der Druckverluste lässt auch definierte turbulente Strömungen innerhalb eines Fensters maximal erlaubter Druckverluste zu, die wiederum einen erhöhten Feuchtigkeitstransport ermöglichen. Im Gegensatz zu Vliesen, die sich relativ leicht zusammenpressen lassen, ergibt sich zudem eine höhere Stabilität in der Verpressrichtung des Stapels. Diese Stabilität lässt sich auch dann aufrechterhalten, nachdem der Stapel bei seinem Aufbau einmalig verpresst wurde und nicht ständig eine Presskraft auf den Stapel ausgeübt wird.

Nach einer bevorzugten Ausgestaltung der Erfindung weist die Stützfolie in dem die Durchgangsöffnungen aufweisenden aktiven Bereich eine freie Fläche im Bereich von 20 bis 80 %, insbesondere im Bereich von 40 bis 70 %, vorzugsweise im Bereich von 55 bis 65 % ihrer Gesamtfläche, auf. Liegt der Anteil der freien Fläche unterhalb der genannten Untergrenzen, findet ein verringerter Feuchtigkeitsaustausch zwischen Feuchtgas und Membran statt. Liegt die freie Fläche andererseits oberhalb der genannten Obergrenzen, wird die Stützfunktion der Stützfolie für die Membran stark verringert. Insbesondere der bevorzugte Bereich von 55 bis 65 % Anteil freier Fläche führt gegenüber den herkömmlichen Vliesen, die typischerweise eine freie Fläche von weniger als 50 % ihrer Gesamtfläche aufweisen, zu einer erhöhten Wassertransportrate. Durch die höhere Wassertransportrate verringert sich die benötigte Membranfläche, so dass bei gleicher Wassertransportleistung ein geringeres Bauteilvolumen erzielt werden kann.

Die Durchgangsöffnungen der Stützfolie können beliebige Ausgestaltungen aufweisen. Bevorzugt weisen sie eine kreisförmige Gestalt auf, wobei Durchmesser von höchstens 1 mm, insbesondere höchstens 700 µm, vorzugsweise höchstens 400 µm, bevorzugt sind. Mit anderen Worten wird die freie Fläche vorzugsweise auf eine hohe Anzahl entsprechende kleinerer Durchgangsöffnungen verteilt, um so eine homogene Stützwirkung über den gesamten aktiven Bereich zu erzielen.

Es ist ferner bevorzugt vorgesehen, dass die erste, das relativ trockene Prozessgas führende Schichtanordnung ferner zwei beidseitig an die erste Strömungsschicht anschließende Abstandshalterfolien umfasst, welche einen umlaufenden Rahmenbereich und wenigstens eine, von dem umlaufenden Rahmenbereich begrenzte zentrale Ausnehmung aufweisen. Die Abstandshalterfolie hat somit die Gestalt eines Rahmens, wobei vorzugsweise die gesamte zentrale aktive Fläche ausgespart ist. Gemäß dieser Ausgestaltung wird somit auch die im Stand der Technik übliche Schicht eines Diffusionsmediums auf der Hochdruckseite der Membran durch eine Folienstruktur ersetzt. Auf diese Weise lassen sich die zuvor beschriebenen Vorteile der erfindungsgemäßen Befeuchtungseinrichtung noch weiter verstärken.

Die Stützfolien und/oder die Abstandshalterfolien umfassen vorzugsweise unabhängig voneinander ein Metall, einen Kunststoff oder ein Kompositmaterial, oder sie bestehen aus einem solchen. Vorzugsweise wird ein Metall verwendet, insbesondere ein Edelstahl.

Die erfindungsgemäß verwendeten Stütz- und/oder Abstandshalterfolien weisen unabhängig voneinander eine bevorzugte Schichtdicke im Bereich von 20 bis 120 µm auf, insbesondere im Bereich von 30 bis 100 µm, vorzugsweise im Bereich von 40 bis 60 µm. Verglichen mit den im Stand der Technik üblichen Diffusionsmedien, die üblicherweise eine Schichtdicke von ca. 200 µm aufweisen, kann somit eine erhebliche Reduzierung der Gesamtschichtdicke und somit des Bauteilvolumens erzielt werden. Das Volumen der Befeuchtungseinrichtung reduziert sich somit nicht nur durch die verringerte Membranfläche (siehe oben), sondern auch aufgrund der verringerten Schichthöhe des Stapels.

Vorzugsweise umfassen somit die sich wiederholenden Komponenten des Stapels keine poröse Schicht eines Diffusionsmediums in Form von Vliesen oder dergleichen.

Nach einer bevorzugten Ausgestaltung sind die (prozessgasführenden) Strömungskanäle der ersten Strömungsschicht und die (feuchtgasführenden) Strömungskanäle der zweiten Strömungsschicht in unterschiedliche Richtungen verlaufend ausgerichtet, insbesondere in einander kreuzenden Richtungen (Kreuzstrom). Auf diese Weise wird eine besonders hohe Feuchtigkeitsübertragungsrate erzielt. In besonders bevorzugter Ausführung verlaufen die Strömungsstege und damit die Strömungskanäle in parallelen Ebenen, aber um 90° versetzt zueinander.

In einer weiteren bevorzugten Ausgestaltung der Erfindung sind die Strömungskanäle der ersten und/oder der zweiten Strömungsschicht beidseitig offen ausgestaltet und werden durch eine Vielzahl beabstandet zueinander verlaufender Strömungsstege gebildet. Beispielsweise kann die erste und/oder zweite Strömungsschicht jeweils als Folie ausgebildet sein, in deren aktiven Zentralbereich eine Vielzahl von Längsöffnungen ausgebildet ist, welche von den dazwischen verlaufenden Strömungsstegen begrenzt werden.

Mit Vorteil sind zumindest die Komponenten der ersten (prozessgasführenden) Schichtanordnung und/oder die Komponenten der zweiten (feuchtgasführenden) Schichtanordnung jeweils miteinander verfügt. Dies erfolgt insbesondere durch jeweils eine, beidseitig an die Strömungsschicht anschließende Klebeschicht, wobei insbesondere Kleber auf Acryl- oder Silikonbasis zum Einsatz kommen, vorzugsweise Acrylkleber. Vorzugsweise sind ferner Klebeschichten zwischen der wasserdampfpermeablen Membran und der jeweils anschließenden ersten und zweiten Schichtanordnung vorhanden, wobei insbesondere Kleber auf Acryl- oder Silikonbasis zum Einsatz kommen, hier vorzugsweise Silikonkleber. Dabei sind sämtliche Klebeschichten vorzugsweise zumindest in dem umlaufenden, den aktiven Zentralbereich einschließenden Randbereich vorhanden, so dass hier eine Abdichtung erzielt wird. Gegenüber Dichtleisten, wie sie im Stand der Technik beschrieben sind, hat die Ausbildung von Klebstoffdichtungen den Vorteil, im selben Arbeitsschritt wie die Verfügung der verschiedenen Komponenten des Stapels miteinander auch die Abdichtung des Stapels nach außen zu erzeugen.

Das Verfügen einzelner Komponenten miteinander durch Aufbringen von Klebeschichten kann beispielsweise in einem kontinuierlichen Rollenprozess erfolgen.

Der erfindungsgemäße Stapel der sich wiederholenden Komponenten Membran sowie erste und zweite Schichtanordnung ist bevorzugt in einer Halterungskassette angeordnet, welche eine Fixierung und ein Anpressen der Komponenten untereinander bewirkt. Dabei ist der, in der Halterungskassette befindliche Stapel vorzugsweise in einem Gehäuse angeordnet, das ausgebildet ist, die Vielzahl der Strömungskanäle der ersten Schichtanordnungen mit einer Prozessgasversorgung, insbesondere einer Brennstoffzelle, zu verbinden und die Vielzahl der Strömungskanäle der zweiten Schichtanordnungen mit einer Feuchtgasleitung, insbesondere einer Abgasableitung einer Brennstoffzelle, zu verbinden.

Ein weiterer Aspekt der Erfindung betrifft eine Brennstoffzellenanordnung, welche einen Brennstoffzellenstapel mit einer Vielzahl von Kathoden- und Anodenabschnitten umfasst, eine Kathodenprozessgasversorgung zur Versorgung der Anodenabschnitte mit Brennstoff, beispielsweise Wasserstoff, und eine Kathodenprozessgasversorgung zur Versorgung der Kathodenabschnitte mit einem Kathodenprozessgas, insbesondere Sauerstoff oder einem sauerstoffhaltigen Gasgemisch wie Luft. Dabei umfassen die Kathodenprozessgasversorgung und/oder die Anodenprozessgasversorgung eine Befeuchtungseinrichtung gemäß der vorliegenden Erfindung zur Befeuchtung des Kathodenprozessgases bzw. des Anodenprozessgases.

Zu diesem Zweck steht das Kathoden- bzw. Anodenprozessgas in Strömungsverbindung vorzugsweise mit der ersten Strömungsschicht der Befeuchtungseinrichtung und das Kathoden- bzw. Anodenabgas in Strömungsverbindung mit der zweiten Strömungsschicht.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine Brennstoffzellenanordnung mit einer erfindungsgemäßen Befeuchtungseinrichtung;
- Figur 2: eine Einzelzelle der Brennstoffzelle aus Figur 1 in einer Schnittansicht;
- Figur 3: einen Ausschnitt einer Befeuchtungseinrichtung nach einer Ausgestaltung der Erfindung in einer Schnittansicht;
- Figur 4: Einzelansichten einzelner Komponenten einer Feuchtschichtanordnung einer erfindungsgemäßen Befeuchtungseinrichtung, (A) Strömungsschicht; (B) Klebeschicht, (C) Stützfolie; (D) Klebeschicht;
- Figur 5: eine Explosionsdarstellung einer Feuchtschichtanordnung einer erfindungsgemäßen Befeuchtungseinrichtung;
- Figur 6: eine Draufsicht einer Feuchtschichtanordnung einer erfindungsgemäßen Befeuchtungseinrichtung (A) vor und (B) nach ihrem Zuschnitt;
- Figur 7: eine Schnittansicht einer Feuchtschichtanordnung einer erfindungsgemäßen Befeuchtungseinrichtung;
- Figur 8: Einzelansichten einzelner Komponenten einer Trockenschichtanordnung einer erfindungsgemäßen Befeuchtungseinrichtung, (A) Strömungsschicht; (B) Klebeschicht, (C) Abstandshalterfolie; (D) Klebeschicht;
- Figur 9: eine Explosionsdarstellung einer Trockenschichtanordnung einer erfindungsgemäßen Befeuchtungseinrichtung;
- Figur 10: eine Draufsicht einer Trockenschichtanordnung einer erfindungsgemäßen Befeuchtungseinrichtung (A) vor und (B) nach ihrem Zuschnitt;
- Figur 11: eine Schnittansicht einer Trockenschichtanordnung einer erfindungsgemäßen Befeuchtungseinrichtung und
- Figur 12: eine Halterungskassette für einen Stapel einer Vielzahl von Struktureinheiten einer Befeuchtungseinrichtung.

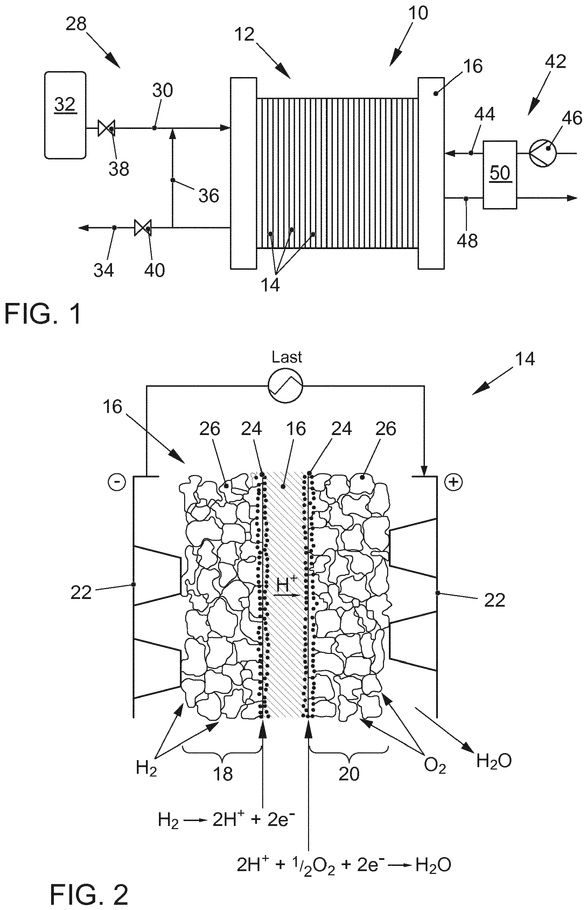

Der grundsätzliche Aufbau und Funktionsweise einer Brennstoffzellenanordnung wird zunächst anhand der Figuren 1 und 2 erläutert.

In Figur 1 ist eine Brennstoffzellenanordnung 10 mit einem Brennstoffzellenstapel 12 (auch einfach Brennstoffzelle genannt) dargestellt, der eine Vielzahl in Reihe geschalteter Einzelzellen 14 umfasst. Der Brennstoffzellenstapel 12 wird durch zwei Endplatten 16 beidseitig zusammengehalten.

Eine einzelne beispielhafte Einzelzelle 14 ist in Figur 2 näher dargestellt ist. Jede Einzelzelle 14 weist eine Membran-Elektroden-Einheit (MEA) auf, die jeweils eine protonenleitende Polymerelektrolytmembran 16 (beispielsweise eine Polyperfluorsulfonsäure-Membran der Handelsbezeichnung Nafion®) umfasst sowie zwei sandwichartig an die beiden äußeren Membranflächen anschließende Elektroden, nämlich eine Anode 18 und eine Kathode 20. Ferner umfassen die Einzelzellen 14 zwischen jeweils zwei MEA angeordnete Bipolarplatten 22, die beidseitig den MEA-Verbund elektrisch kontaktieren und für die Zuleitung der Prozessgase sowie die Ableitung der Abgase sowie des Produktwassers sorgen. Zudem trennen sie die einzelnen MEA im Brennstoffzellenstapel 12 gasdicht voneinander. Die Bipolarplatten 22 weisen eine Vielzahl von inneren Transportkanälen auf, die der Zufuhr der Reaktionsgase (üblicherweise im Fall der Anode Wasserstoff und im Fall der Kathode Sauerstoff bzw. Luft) und kathodenseitig ferner der Abfuhr des Produktwassers dienen. Materialien zur Abdichtung und Stabilisierung der MEA sind nicht dargestellt.

Die Anode 18 und die Kathode 20 sind im dargestellten Beispiel als Gasdiffusionselektroden ausgestaltet und umfassen jeweils eine mikroporöse Katalysatorschicht 24, die auf einer Gasdiffusionsschicht (GDL für gas diffusion layer) 26 aufgebracht ist. Die Katalysatorschicht 24 umfasst ein kohlenstoffhaltiges oder gänzlich aus Kohlenstoff (Graphit) bestehendes Trägermaterial, das als eigentlich reaktive Zentren ein katalytisches Material trägt, bei dem es sich in der Regel um ein Edelmetall handelt, wie Platin, Iridium oder Ruthenium, oder um ein Übergangsmetall, wie Chrom, Cobalt, Nickel, Eisen, Vanadium oder Zinn, oder Mischungen oder Legierungen von diesen. Das Trägermaterial dient einerseits der elektrischen Anbindung des katalytischen Materials und wirkt andererseits fixierend und oberflächenvergrößernd. Funktion der GDL 26 ist es, eine gleichmäßige Anströmung der Katalysatorschichten 24 mit den Reaktionsgasen Sauerstoff beziehungsweise Luft auf der Kathodenseite und Wasserstoff auf der Anodenseite zu gewährleisten. Andere Ausgestaltungen der Elektroden sind im Rahmen der vorliegenden Erfindung ebenfalls einsetzbar. Beispielsweise können die mikroporösen Katalysatorschichten 24 statt auf der GDL 26 auch direkt auf der Membranoberfläche aufgetragen sein.

Die Brennstoffzelle 10 weist ferner gemäß Figur 1 eine Anodenprozessgasversorgung 28 zur Versorgung der Anodenabschnitte der Zellen 14 mit Wasserstoff auf. Die Anodenprozessgasversorgung 28 umfasst eine Anodenprozessgasleitung 30, welche einerseits mit einem Wasserstofftank 32 und andererseits mit den Anodenabschnitten der Brennstoffzelle 12 in Verbindung steht. Ein inneres anodenseitiges Kanalsystem der Bipolarplatten 22 leitet den zugeführten Wasserstoff H₂ den Anoden 18 der Einzelzelle 14 zu, wo dieser unter Abgabe von Elektronen zu Protonen H⁺ oxidiert wird. Über eine Anodenabgasleitung 34, die mit einem weiteren anodenseitigen inneren Kanalsystem der Bipolarplatten 22 in Verbindung steht, wird der unverbrauchte Restwasserstoff (und durch die Membran 16 diffundiertes Produktwasser) abgeführt. Eine Rezirkulationsleitung 36 verbindet die Anodenabgasleitung 34 mit der Anodenprozessgasleitung 30, so dass unverbrauchter Wasserstoff in den Kreislauf zurückgeführt werden kann. Die Anodenabgasrezirkulation ist deshalb von Vorteil, da die Brennstoffzelle 12 üblicherweise mit einem Wasserstoffüberschuss (überstöchiometrisch) gegenüber dem kathodenseitigen Sauerstoff betrieben wird, so dass der Wasserstoff nicht vollständig umgesetzt wird. Der Betriebsdruck und die Rezirkulationsrate sind über entsprechende Ventile 38, 40 steuerbar.

Ferner verfügt die Brennstoffzelle 10 über eine Kathodenprozessgasversorgung 42 mit einer Kathodenprozessgasleitung 44 und einem Fördermittel 46, beispielsweise einer Pumpe, um Luft und damit Sauerstoff zu den Bipolarplatten 22 und von dort über ein kathodenseitiges Kanalsystem derselben den Kathoden 20 zuzuleiten. Über ein weiteres kathodenseitiges Kanalsystem der Bipolarplatten 22 und eine daran angeschlossene Kathodenabgasleitung 48 erfolgt die Ableitung der restlichen Luft und des Produktwassers.

Um eine ausreichende Befeuchtung der Polymerelektrolytmembran 16 der Einzelzellen 14 der Brennstoffzelle 12 zu erzielen, verfügt die Kathodenprozessgasversorgung 42 ferner über eine erfindungsgemäße Befeuchtungseinrichtung 50 zur Befeuchtung des Kathodenprozessgases (Luft) unter partieller Rückführung des kathodenseitig gebildeten und über die Kathodenabgasleitung 48 aus der Brennstoffzelle 12 ausgetragenen Produktwassers. Zu diesem Zweck ist die Befeuchtungseinrichtung 50 sowohl mit der Kathodenprozessgasleitung 44 als auch mit der Kathodenabgasleitung 48 verbunden. Alternativ oder zusätzlich kann auch die Anodenprozessgasversorgung 28 mit einer entsprechenden Befeuchtungseinrichtung 50 ausgestattet sein, wobei in diesem Fall das durch die Polymerelektrolytmembran 16 diffundierte und mit dem Anodenabgas ausgetragene Produktwasser zur Befeuchtung des Anodenprozessgases (Wasserstoff) genutzt wird.

Nicht dargestellt in Figur 1 sind weitere Komponenten der Brennstoffzelle 12, beispielsweise ein Kühlsystem, Temperatur- und Drucksensoren und dergleichen sowie elektronische Steuermittel zur Steuerung der Brennstoffzelle 12 sowie ihrer angeschlossenen Komponenten.

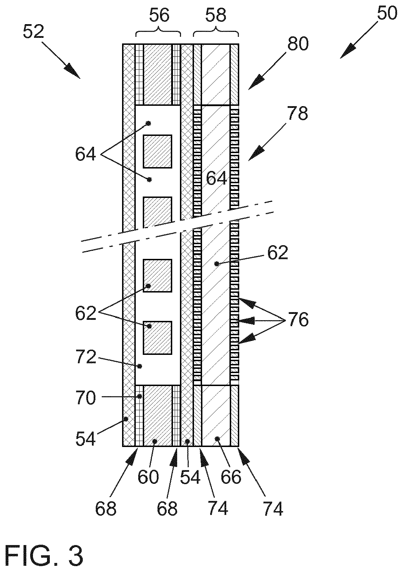

Die erfindungsgemäße Befeuchtungseinrichtung 50 wird in den Figuren 3 bis 12 näher dargestellt.

Figur 3 zeigt von der erfindungsgemäßen Befeuchtungseinrichtung 50 einen Ausschnitt eines Stapels 52 sich wiederholender Komponenten. Diese umfassen eine wasserdampfpermeable Membran 54, eine auf einer ersten Seite der Membran 54 angeordnete erste Schichtanordnung 56 (nachfolgend auch Trockenschichtanordnung genannt) sowie eine, auf einer zweiten Seite der Membran 54 angeordnete zweite Schichtanordnung 58 (nachfolgend auch Feuchtschichtanordnung).

Die Trockenschichtanordnung 56 umfasst eine erste Strömungsschicht 60, welche eine Vielzahl, parallel zur Membran 54 verlaufender Strömungsstege 62 umfasst, welche eine Vielzahl ebenfalls parallel zur Membran 54 verlaufender Strömungskanäle 64 definieren. Die Strömungsstege 62 und Strömungskanäle 64 der ersten Strömungsschicht 60 verlaufen in der gewählten Darstellung der Figur 3 senkrecht zur Papierebene. In gleicher Weise umfasst auch die Feuchtschichtanordnung 58 eine Vielzahl parallel zur Membran 54 verlaufender Strömungsstege 62, zwischen denen Strömungskanäle 64 ausgebildet werden. Die Strömungsstege 62 und Strömungskanäle 64 der Trockenschichtanordnung 56 sowie der Feuchtschichtanordnung 58 verlaufen vorzugsweise dem Kreuzstromprinzip entsprechend, das heißt in Richtungen, die um 90° zueinander versetzt sind. Demnach verlaufen die Strömungsstege 62 und Strömungskanäle 64 der Feuchtschichtanordnung 58 parallel zur Papierebene gemäß der Darstellung der Figur 3.

Die Trockenschichtanordnung 56 mit ihren Strömungskanälen 64 dient der Leitung eines zu befeuchtenden Prozessgases, insbesondere für eine Brennstoffzelle 12, wie sie in den Figuren 1 und 2 dargestellt ist. Vorzugsweise dient sie der Leitung eines den Kathoden einer Brennstoffzelle zuzuführenden Prozessgases, insbesondere von Luft. Die Feuchtschichtanordnung 58 mit ihren Strömungskanälen 64 hingegen dient der Leitung eines Feuchtgases, das eine höhere Feuchtigkeit als das Prozessgas aufweist, insbesondere dem Kathodenabgas der Brennstoffzelle 12.

Die Trockenschichtanordnung 56 weist ferner zwei, beidseitig an die erste Strömungsschicht 60 anschließende Abstandshalterfolien 68 auf. Die Abstandshalterfolien 68 umfassen einen umlaufenden Randbereich 70, der eine zentrale Ausnehmung 72 begrenzt. Die Funktion der Abstandshalterfolie 68 ist, die empfindliche Membran 54 vor einem direkten Kontakt mit den Strömungsstegen 62 der Trockenschichtanordnung 56 zu schützen. Zudem wird durch den erzeugten Abstand zwischen den Stegen 62 und der Membran 54 die freie Membranfläche maximiert.

Die Feuchtschichtanordnung 58 hingegen weist zwei Stützfolien 74 auf, welche die zweite Strömungsschicht 66 sandwichartig einschließen. Die Stützfolie 74 zeichnet sich durch eine Vielzahl von kleinen Durchgangsöffnungen 76 aus, die beispielsweise eine kreisförmige Gestalt aufweisen können. Aufgabe der Stützfolie 74 ist, die wasserdampfpermeable Membran 54 auf ihrer Niederdruckseite mechanisch abzustützen. Gleichzeitig soll sie einen möglichst guten Gasaustausch zwischen den Strömungskanälen 64 und der Membran 54 ermöglichen.

Es versteht sich, dass der Stapel 52 als zentrale Komponente der Befeuchtungseinrichtung 50 eine Vielzahl der in Figur 3 dargestellten Struktureinheit aufweist. Dabei werden abwechselnd die Trockenschichtanordnung 56 und die Feuchtschichtanordnung 58 aufeinander gestapelt, wobei jeweils eine Schicht einer wasserdampfpermeablen Membran 54 zwischen gefügt wird.

In Figur 3 ist ferner ersichtlich, dass der Stapel 52 einen zentralen aktiven Bereich 78 aufweist, der von einem Randbereich 80 rahmenförmig umgeben wird. Der eigentliche Wasserdampftransport über die Membran 54 findet lediglich im aktiven Bereich 78 statt. Der Randbereich 78 hat überwiegend Stabilisierungs- und Dichtungsfunktion. Nicht dargestellt in Figur 3 sind Klebeschichten, die vorzugsweise zwischen sämtlichen Schichten des Stapels 52 vorhanden sind, insbesondere jeweils im Randbereich 80, so dass hier eine Verbindung der Komponenten miteinander sowie eine Abdichtung nach außen durch die Klebeschichten erfolgt.

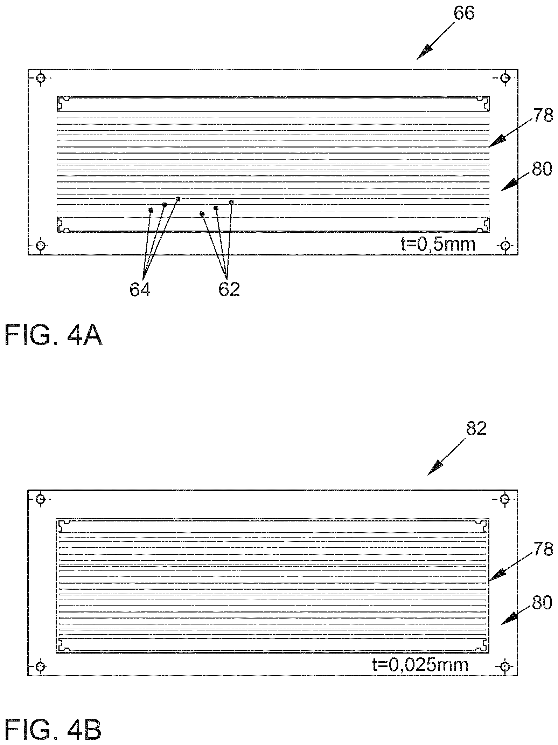

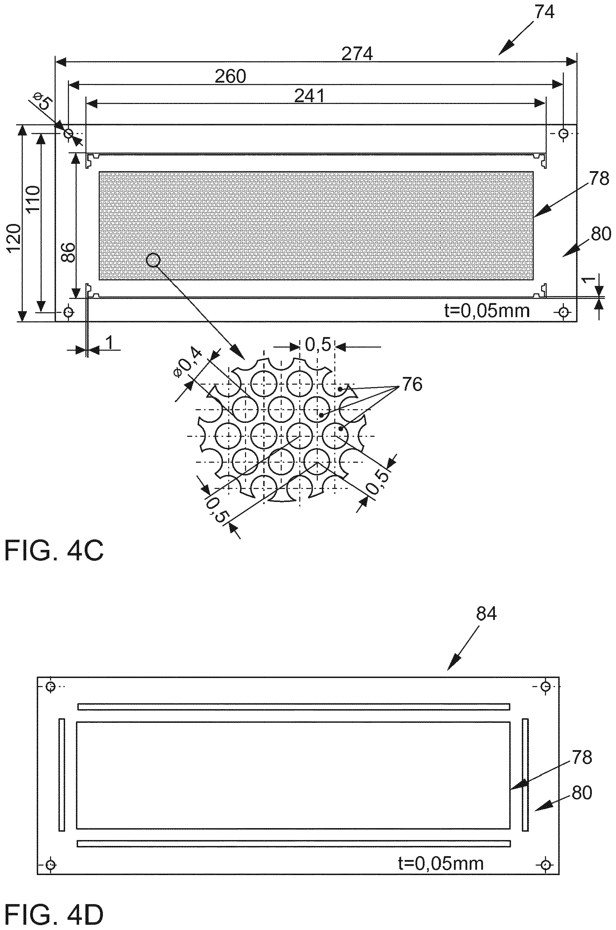

Einzelheiten zum Aufbau der Feuchtschichtanordnung 58 sowie ihre einzelnen Komponenten sind in den Figuren 4 bis 7 dargestellt.

In der Figur 4A bis 4D sind die einzelnen Schichten der Feuchtschichtanordnung 58 gemäß einem speziellen Ausführungsbeispiel gezeigt.

Figur 4A zeigt ein Beispiel für die zweite Strömungsschicht 66 der Feuchtschichtanordnung 58. Erkennbar wird in dem aktiven Bereich 78 eine Vielzahl von Strömungsstegen 62 der Folie ausgebildet, welche dazwischen verlaufende Strömungskanäle 64 begrenzen. Als Material für die als Folie ausgebildete zweite Strömungsschicht 66 kommen insbesondere Kunststoffe, wie Polyetherketone (PEEK), Polyetherimide (PEI), Polysulfone (PSU) und dergleichen, oder Metalle, insbesondere Edelstähle und Leichtmetalle, wie Aluminium oder Magnesium und deren Legierungen infrage. Im vorliegenden Beispiel wurde ein Edelstahl verwendet. Geeignete Schichtdicken liegen im Bereich von 0,1 bis 1,0 mm, insbesondere von 0,3 bis 0,8 mm. Im vorliegenden Beispiel beträgt die Schichtdicke der zweiten Strömungsschicht 66 und damit die Steghöhe 0,5 mm. Die Strömungskanäle 64 können beispielsweise mittels Laserschneiden oder mittels Ausstanzen aus einer durchgehenden Folie erzeugt werden.

Figur 4B zeigt ein Beispiel für eine Klebstoffschicht 82, die vorzugsweise beidseitig auf die Strömungsschicht 66 aufgebracht wird. Im dargestellten Beispiel hat die Klebeschicht 82 den gleichen Zuschnitt, wie die in Figur 4A gezeigte Strömungsschicht 66, d.h. sie bildet auch die Stege nach. In alternativer Ausgestaltung kann jedoch der aktive Bereich 78 klebstofffrei sein, während nur der Randbereich 80 eine durchgehende Klebstoffschicht aufweist. Typische Schichtdicken für die Klebeschicht 82 liegen im Bereich von 0,01 bis 0,1 mm. Im dargestellten Ausführungsbeispiel beträgt die Schichtdicke 0,025 mm. Als Klebstoffe kommen insbesondere Klebstoffe auf Acryl- oder Silikonbasis infrage, wobei vorliegend ein Acrylkleber verwendet wurde.

Figur 4C zeigt ein Beispiel für eine Stützfolie 74, die in ihrem aktiven Bereich 78 eine Vielzahl von Öffnungen 76 aufweist. In der Detaildarstellung ist erkennbar, dass in dem vorliegenden Beispiel die Öffnungen 76 eine kreisrunde Gestalt aufweisen. Gemäß dem vorliegenden Ausführungsbeispiel weisen die Durchgangsöffnungen 76 einen Durchmesser von 0,4 mm auf, wobei eine Fläche in dem aktiven Bereich 78 etwa 58 % betrug. Die Schichtdicke der Stützfolie 74 betrug 0,05 mm. Für die Materialien kommen grundsätzlich die im Zusammenhang mit der Strömungsschicht 66 diskutierten Materialien infrage, wobei im vorliegenden Beispiel Edelstahl für die Stützfolie 74 verwendet wurde.

Figur 4D zeigt ein Ausführungsbeispiel einer Klebeschicht 84, die vorzugsweise auf beiden Außenseiten der Feuchtschichtanordnung 58, also auf den Stützfolien 74 angeordnet ist. Hier ist die Klebeschicht ausschließlich im umlaufenden Randbereich 80 vorgesehen, während der zentrale aktive Bereich 78 klebstofffrei bleibt. Als Klebstoffe können wiederum insbesondere Klebstoffe auf Acryl- oder Silikonbasis verwendet werden, vorzugsweise auf Silikonbasis. Typische Schichtdicken für die Klebeschicht 84 liegen im Bereich von 0,01 bis 0,1 mm, wobei im vorliegenden Fall die Schichtdicke 0,05 mm betrug.

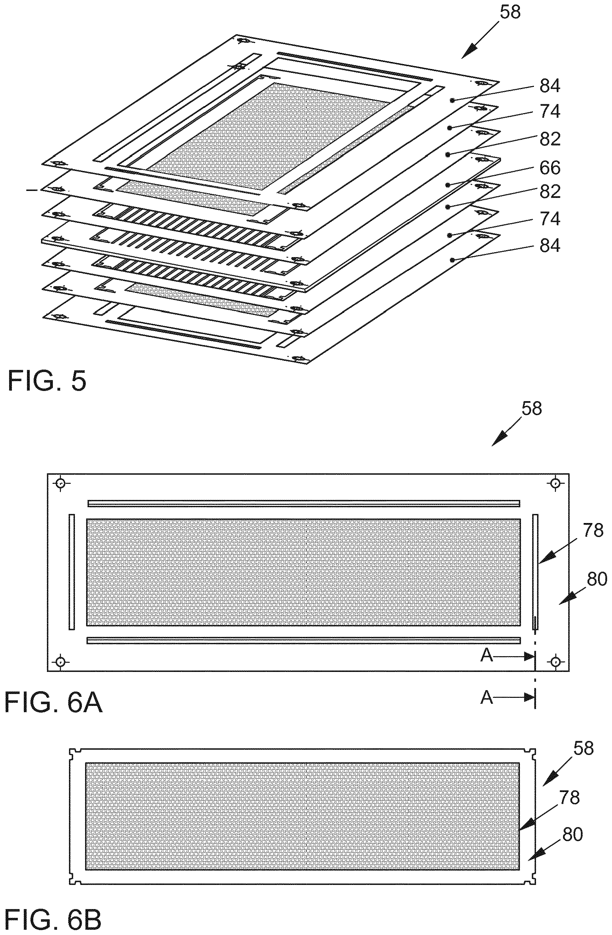

Figur 5 zeigt den Aufbau der zweiten Schichtanordnung 58 (Feuchtschichtanordnung) in einer Explosionsdarstellung. Dabei wird die zentrale Strömungsschicht 66 mit ihren Strömungsstegen und Strömungskanälen beidseitig von jeweils einer Klebeschicht 82 sandwichartig eingeschlossen. An die Klebeschichten 82 wiederum schließt jeweils eine Stützfolie 74 gemäß der vorliegenden Erfindung an. Die Anordnung schließt mit jeweils einer weiteren Klebeschicht 84 ab.

Figur 6 zeigt die Feuchtschichtanordnung 58 nach ihrer Verfügung mittels der Klebeschichten 82 und 84 in einer Draufsicht (Figur 6A). Das Verfügen kann beispielsweise mittels kontinuierlicher Rollenprozessen erfolgen. Vorteilhaft ist auch, die äußeren Klebeschichten 84 zunächst noch von einer Trägerfolie (Papier oder Kunststoff) beschichtet zu halten, welche erst vor dem Verfügen und Verpressen mit der Membran 54 entfernt wird. Nach dem Zusammenfügen der einzelnen Schichten wird die Feuchtschichtanordnung 58 auf ihre Endgröße zugeschnitten (Figur 6B).

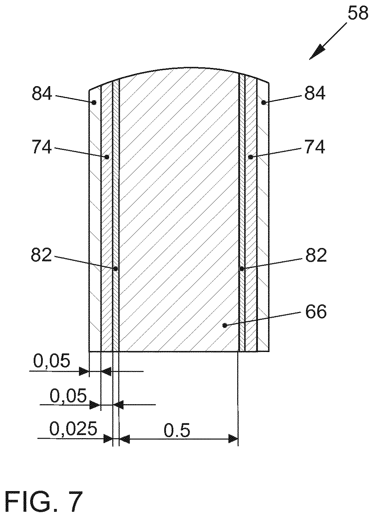

Figur 7 zeigt den Aufbau der Feuchtschichtanordnung 58 gemäß dem dargestellten Ausführungsbeispiel in einer Querschnittsdetailansicht, aus welcher auch die Schichtdicken ersichtlich sind (Angaben in mm).

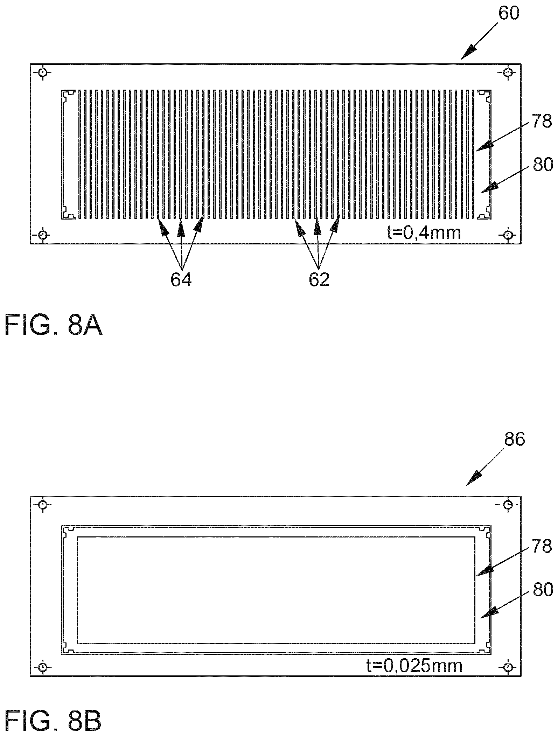

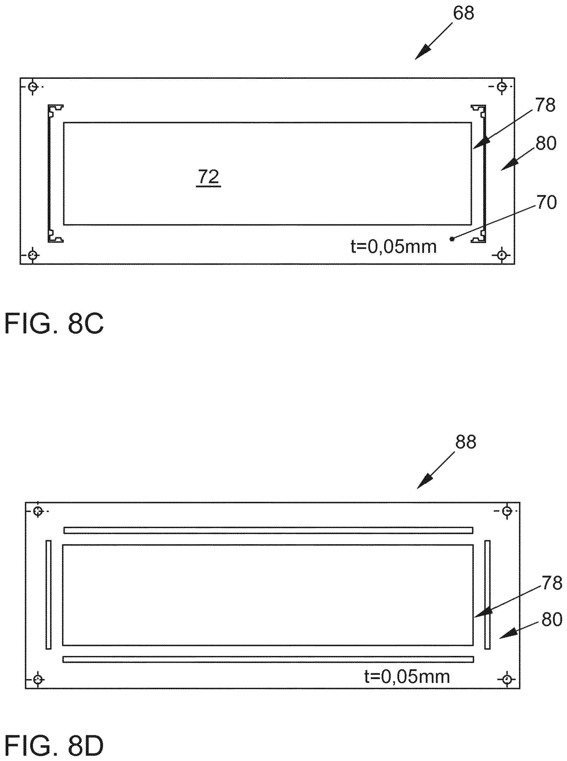

Einzelheiten zum Aufbau der Trockenschichtanordnung 56 sowie ihre einzelnen Komponenten sind in den Figuren 8 bis 11 dargestellt.

In der Figur 8A bis 8D sind die einzelnen Schichten der Trockenschichtanordnung 56 gemäß einem speziellen Ausführungsbeispiel gezeigt.

Figur 8A zeigt ein Beispiel für die erste Strömungsschicht 60 der Trockenschichtanordnung 56. Erkennbar wird in dem aktiven Bereich 78 eine Vielzahl von Strömungsstegen 62 der Folie ausgebildet, welche dazwischen verlaufende Strömungskanäle 64 begrenzen. Um den gewünschten Kreuzstrom zu erhalten, verlaufen die Strömungsstege 62 und -kanäle 64 der ersten Strömungsschicht 60 der Trockenschichtanordnung 58 quer zu denen der zweiten Strömungsschicht 66 der Feuchtschichtanordnung 68 (vgl. Figur 4A). In Hinblick auf die Materialien für die als Folie ausgebildete erste Strömungsschicht 66 sowie auf die Schichtdicken (Steghöhen) gelten die für die zweite Strömungsschicht 66 gemachten Ausführungen.

Figur 8B zeigt ein Beispiel für eine Klebeschicht 86, die vorzugsweise beidseitig auf die Strömungsschicht 60 aufgebracht wird. Im dargestellten Beispiel ist der aktive Bereich 78 klebstofffrei, während nur der Randbereich 80 eine durchgehende Klebstoffschicht aufweist. Typische Schichtdicken und Materialien für die Klebeschicht 86 entsprechen denen für die Klebeschicht 82 (Figur 4B).

Figur 8C zeigt ein Beispiel für eine erfindungsgemäße Abstandshalterfolie 68. Diese zeichnet sich durch eine große zentrale Ausnehmung 72 (Fenster) aus, die den gesamten aktiven Bereich 78 ausspart. Die Ausnehmung 72 wird durch den Rahmenbereich 70 umgeben, dem die Abstandshalterfunktion zwischen Strömungsschicht 60 und Membran 54 zukommt. In Hinblick auf die Materialien und Schichtdicken gelten die Ausführungen zur Stützfolie 74 entsprechend. Im vorliegenden Beispiel wurde Edelstahl für die Abstandshalterfolie 68 verwendet und die Schichtdicke betrug 0,05 mm.

Figur 8D zeigt ein Ausführungsbeispiel einer Klebeschicht 88, die vorzugsweise auf beiden Außenseiten der Feuchtschichtanordnung 58, also auf den Stützfolien 74 angeordnet ist. Es gelten die für die Klebeschicht 84 gemachten Ausführungen. Im vorliegenden Fall wurde ein Kleber auf Silikonbasis verwendet und die Schichtdicke betrug 0,05 mm.

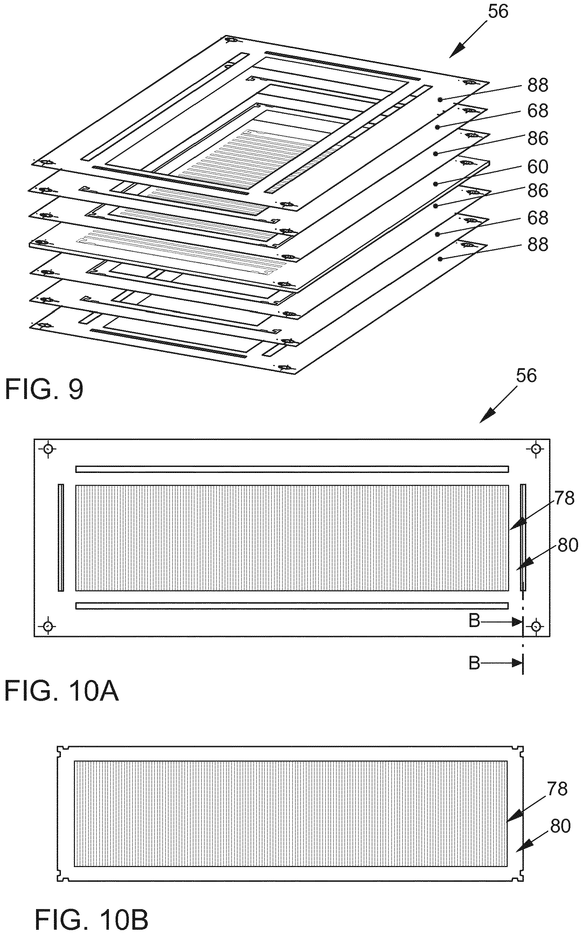

Figur 9 zeigt den Aufbau der ersten Schichtanordnung 56 (Trockenschichtanordnung) in einer Explosionsdarstellung. Dabei wird die zentrale Strömungsschicht 60 mit ihren Strömungsstegen und Strömungskanälen beidseitig von jeweils einer Klebeschicht 86 sandwichartig eingeschlossen. An die Klebeschichten 86 wiederum schließt jeweils eine Abstandshalterfolie 68 gemäß der vorliegenden Erfindung an. Die Anordnung schließt mit jeweils einer weiteren Klebeschicht 88 ab.

Figur 10 zeigt die Trockenschichtanordnung 56 nach ihrer Verfügung mittels der Klebeschichten 86 und 88 in einer Draufsicht (Figur 10A). Das Verfügen kann beispielsweise mittels kontinuierlicher Rollenprozesse erfolgen. Vorteilhaft ist auch, die äußeren Klebeschichten 88 zunächst noch von einer Trägerfolie (Papier oder Kunststoff) beschichtet zu halten, welche erst vor dem Verfügen und Verpressen mit der Membran 54 entfernt wird. Nach dem Zusammenfügen der einzelnen Schichten wird die Trockenschichtanordnung 56 auf ihre Endgröße zugeschnitten (Figur 10B).

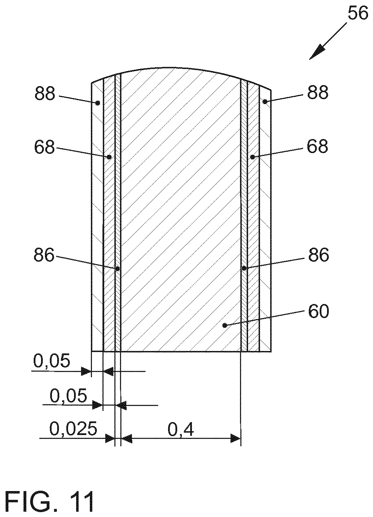

Figur 11 zeigt den Aufbau der Trockenschichtanordnung 56 gemäß dem dargestellten Ausführungsbeispiel in einer Querschnittsdetailansicht, aus welcher auch die Schichtdicken ersichtlich sind (Angaben in mm).

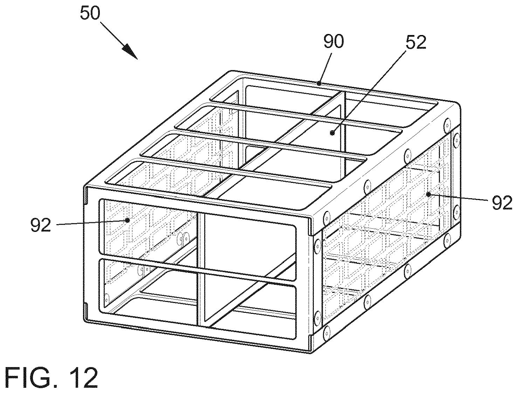

Figur 12 zeigt weitere Details zum Aufbau der erfindungsgemäßen Befeuchtungseinrichtung 50. Demnach wird der Stapel 52, von dem hier lediglich exemplarisch eine Trocken- oder Feuchtschichtanordnung gezeigt ist, in eine Halterungskassette 90 zwischen zwei Endplatten 92 angeordnet. Dabei werden so viele Trocken- oder Feuchtschichtanordnungen sowie dazwischen angeordnete Membranen in die Kassette 90 aufgeschichtet, bis diese soweit gefüllt ist, dass nach Verschließen der Kassette die Komponenten dichtend aufeinander anpressen.

Die Halterungskassette 90 mit dem darin befindlichen Befeuchterstapel 52 wird dann in einem nicht dargestellten Gehäuse angeordnet, das Anschlüsse für das der Brennstoffzelle zuzuführende und zu befeuchtende Prozessgas sowie für das aus der Brennstoffzelle abgeführte feuchte Abgas aufweist. Beispielsweise kann das trockene Prozessgas durch die in Figur 12 oben liegende offene Seitenfläche der Kassette 90 in den Stapel 52 eingeleitet und aus der unten liegenden Seite der Kassette ausgeleitet werden. Auf der anderen Seite kann das relativ feuchte Abgas der Brennstoffzelle durch die vordere offene Seite der Kassette 90 in den Stapel 52 eingeleitet und durch die in der Darstellung hinten liegende offene Seite abgeleitet werden. Zur Trennung der entsprechenden Räume kann das Gehäuse über entsprechende Dichtungen verfügen.

### Bezugszeichenliste

- 10: Brennstoffzellenanordnung
- 12: Brennstoffzellenstapel (Brennstoffzelle)
- 14: Einzelzelle
- 16: Polymerelektrolytmembran (PEM)
- 18: Anode
- 20: Kathode
- 22: Bipolarplatte
- 24: Katalysatorschicht
- 26: Gasdiffusionsschicht
- 28: Anodenprozessgasversorgung
- 30: Anodenprozessgasleitung
- 32: Wasserstofftank
- 34: Anodenabgasleitung
- 36: Rückführungsleitung
- 38: Ventil
- 40: Ventil
- 42: Kathodenprozessgasversorgung
- 44: Kathodenprozessgasleitung
- 46: Luftfördermittel
- 48: Kathodenabgasleitung
- 50: Befeuchtungseinrichtung
- 52: Stapel
- 54: wasserdampfpermeable Membran
- 56: erste Schichtanordnung / Trockenschichtanordnung
- 58: zweite Schichtanordnung / Feuchtschichtanordnung
- 60: erste Strömungsschicht
- 62: Strömungsstege
- 64: Strömungskanäle
- 66: zweite Strömungsschicht
- 68: Abstandshalterfolie
- 70: Randbereich
- 72: Ausnehmung
- 74: Stützfolie
- 76: Öffnungen
- 78: aktiver Bereich
- 80: Randbereich
- 82: Klebeschicht
- 84: Klebeschicht
- 86: Klebeschicht
- 88: Klebeschicht
- 90: Halterungskassette
- 92: Endplatte

## Patentansprüche

1. Befeuchtungseinrichtung (50) zur Befeuchtung von Prozessgasen, insbesondere für Brennstoffzellen (12), umfassend einen Stapel (52) sich wiederholender Komponenten, umfassend
a) eine wasserdampfpermeable erste Membran (54),
b) eine, auf einer ersten Seite der ersten Membran (54) angeordnete erste Schichtanordnung (56), umfassend
b1) eine erste Strömungsschicht (60) zur Leitung eines zu befeuchtenden Prozessgases, umfassend eine Vielzahl parallel zur ersten Membran (54) verlaufender Strömungskanäle (64),
c) eine, auf einer zweiten Seite der ersten Membran (54) angeordnete zweite Schichtanordnung (58), umfassend
c1) eine zweite Strömungsschicht (66) zur Leitung eines Feuchtgases, umfassend eine Vielzahl parallel zur ersten Membran (54) verlaufender Strömungskanäle (64), sowie
c2) zwei, beidseitig an die zweite Strömungsschicht (66) anschließende Stützfolien (74), die eine Vielzahl an Durchgangsöffnungen (76) aufweisen,
d) eine wasserdampfpermeable zweite Membran (54), die auf der der ersten Membran (54) abgewandten Seite der zweiten Schichtanordnung (58) angeordnet ist,
**dadurch gekennzeichnet, dass**
die Stützfolien (74) mit ihrem äußeren Umfang jeweils mit einem äußeren Umfang der zweiten Strömungsschicht (66) und der Membranen (54) abschließen.

2. Befeuchtungseinrichtung (50) nach Anspruch 1, **dadurch gekennzeichnet, dass** die Stützfolien (74) zumindest in einem, die Durchgangsöffnungen (76) aufweisenden aktiven Bereich (78) eine freie Fläche im Bereich von 30 bis 80 %, insbesondere im Bereich von 40 bis 70 %, vorzugsweise im Bereich von 55 bis 65 %, aufweisen.

3. Befeuchtungseinrichtung (50) nach Anspruch 1 oder 2, **dadurch gekennzeichnet, dass** die Durchgangsöffnungen (76) der Stützfolien (74) eine kreisförmige Gestalt mit Durchmessern von höchstens 1 mm, insbesondere höchstens 700 µm, vorzugsweise höchstens 400 µm, aufweisen.

4. Befeuchtungseinrichtung (50) nach einem der vorhergehenden Ansprüche, **dadurch gekennzeichnet, dass** die erste Schichtanordnung (56) ferner
b2) zwei, beidseitig an die erste Strömungsschicht (60) anschließende Abstandshalterfolien (68) umfasst, welche einen umlaufenden Rahmenbereich (70) und wenigstens eine, von dem umlaufenden Rahmenbereich (70) begrenzte zentrale Ausnehmung (72) aufweisen.

5. Befeuchtungseinrichtung (50) nach einem der vorhergehenden Ansprüche, **dadurch gekennzeichnet, dass** die Stützfolien (74) und/oder die Abstandshalterfolien (68) unabhängig voneinander eine Schichtdicke im Bereich von 20 bis 120 µm aufweisen, insbesondere im Bereich von 30 bis 100 µm, vorzugsweise im Bereich von 40 bis 60 µm.

6. Befeuchtungseinrichtung (50) nach einem der vorhergehenden Ansprüche, **dadurch gekennzeichnet, dass** die Strömungskanäle (64) der ersten Strömungsschicht (58) und die Strömungskanäle (64) der zweiten Strömungsschicht (60) in einander kreuzende Richtungen verlaufen.

7. Befeuchtungseinrichtung (50) nach einem der vorhergehenden Ansprüche, **dadurch gekennzeichnet, dass** die Strömungskanäle (64) der ersten und/oder zweiten Strömungsschicht (58, 60) beidseitig offen sind und durch eine Vielzahl beabstandet zueinander verlaufender Strömungsstege (62) gebildet werden.

8. Befeuchtungseinrichtung (50) nach einem der vorhergehenden Ansprüche, **dadurch gekennzeichnet, dass** zumindest die Komponenten der ersten Schichtanordnung (56) und/oder die Komponenten der zweiten Schichtanordnung (58) jeweils miteinander verfügt sind, insbesondere durch jeweils eine, beidseitig an die Strömungsschicht (58, 60) anschließende Klebeschicht (82, 86).

9. Befeuchtungseinrichtung (50) nach einem der vorhergehenden Ansprüche, **dadurch gekennzeichnet, dass** die sich wiederholenden Komponenten keine poröse Schicht eines Diffusionsmediums umfassen.

10. Befeuchtungseinrichtung (50) nach einem der vorhergehenden Ansprüche, **dadurch gekennzeichnet, dass** der Stapel (52) der sich wiederholenden Komponenten in einem Gehäuse angeordnet ist, das ausgebildet ist, die Vielzahl erster Strömungsschichten (58) mit einer Prozessgaszuleitung (30, 44) einer Brennstoffzelle (12) zu verbinden und die Vielzahl zweiter Strömungsschichten (60) mit einer Abgasableitung (34, 48) einer Brennstoffzelle (12) zu verbinden.

11. Brennstoffzellenanordnung (10), umfassend einen Brennstoffzellenstapel (12) mit einer Vielzahl von Kathodenabschnitten und einer Vielzahl von Anodenabschnitten, eine Anodenprozessgasversorgung (28) und eine Kathodenprozessgasversorgung (42), wobei die Kathodenprozessgasversorgung (42) und/oder die Anodenprozessgasversorgung (28) eine Befeuchtungseinrichtung (50) nach einem der Ansprüche 1 bis 10 zur Befeuchtung eines Kathodenprozessgases beziehungsweise eines Anodenprozessgases umfasst.

## Claims

1. Humidification device (50) for humidifying process gases, in particular for fuel cells (12), comprising a stack (52) of repeating components comprising
a) a water vapour-permeable first membrane (54),
b) a first layer arrangement (56) arranged on a first side of the first membrane (54), comprising
b1) a first flow layer (60) for conducting a process gas to be humidified, comprising a plurality of flow channels (64) running parallel to the first membrane (54),
c) a second layer arrangement (58) arranged on a second side of the first membrane (54), comprising
c1) a second flow layer (66) for conducting a wet gas, comprising a plurality of flow channels (64) running parallel to the first membrane (54) as well as
c2) two support films (74) connecting on both sides of the second flow layer (66), which have a plurality of through openings (76),
d) a water-vapour permeable second membrane (54) which is arranged on the side of the second layer arrangement (58) facing away from the first membrane (54),
**characterised in that**
the support films (74) with their outer periphery end respectively with an outer periphery of the second flow layer (66) and of the membranes (54).

2. Humidification device (50) according to claim 1, **characterised in that** the support films (74) at least in an active region (78) with the through openings (76) have a free area in the range of 30 to 80%, in particular in the range of 40 to 70%, preferably in the range of 55 to 65%.

3. Humidification device (50) according to claim 1 or 2, **characterised in that** the through openings (76) of the support films (74) have a circular form with diameters of at most 1 mm, in particular at most 700 µm, preferably at most 400 µm.

4. Humidification device (50) according to any of the preceding claims, **characterised in that** the first layer arrangement (56) further comprises
b2) two spacer films (68) adjoining the first flow layer (60) on both sides which have a peripheral frame region (70) and at least one central recess (72) delimited by the peripheral frame region (70).

5. Humidification device (50) according to any of the preceding claims, **characterised in that** the support films (74) and/or the spacer films (68) independently of one another have a layer thickness in the range of 20 to 120 µm, in particular in the range of 30 to 100 µm, preferably in the range of 40 to 60 µm.

6. Humidification device (50) according to any of the preceding claims, **characterised in that** the flow channels (64) of the first flow layer (58) and the flow channels (64) of the second flow layer (60) run in intersecting directions.

7. Humidification device (50) according to any of the preceding claims, **characterised in that** the flow channels (64) of the first and/or second flow layer (58, 60) are open on both sides and are formed by a plurality of flow lands (62) which are spaced apart from one another.

8. Humidification device (50) according to any of the preceding claims, **characterised in that** at least the components of the first layer arrangement (56) and/or the components of the second layer arrangement (58) are joined together respectively, in particular by an adhesive layer (82, 86) attaching on both sides to the flow layer (58, 60).

9. Humidification device (50) according to any of the preceding claims, **characterised in that** the repeating components do not comprise a porous layer of a diffusion medium.

10. Humidification device (50) according to any of the preceding claims, **characterised in that** the stack (52) of repeating components is arranged in a housing, which is designed to connect a plurality of first flow layers (58) to a process gas feed line (30, 44) of a fuel cell (12) and to connect the plurality of second flow layers (60) to an exhaust gas line (34, 48) of a fuel cell (12).

11. Fuel cell arrangement (10) comprising a fuel cell stack (12) with a plurality of cathode sections and a plurality of anode sections, an anode process gas supply (28) and a cathode process gas supply (42), wherein the cathode process gas supply (42) and/or the anode process gas supply (28) comprises a humidification device (50) according to any of claims 1 to 10 for humidifying a cathode process gas or an anode process gas.

## Revendications

1. Dispositif d'humidification (50) pour l'humidification de gaz de procédé, en particulier pour des piles à combustible (12), comprenant un empilement (52) de composants répétitifs, comprenant
a) une première membrane (54) perméable à la vapeur d'eau,
b) un premier ensemble de couches (56) disposé sur une première face de la première membrane (54), comprenant
b1) une première couche d'écoulement (60) pour l'acheminement d'un gaz de procédé à humidifier, comprenant une pluralité de canaux d'écoulement (64) s'étendant parallèlement à la première membrane (54),
c) un second ensemble de couches (58) disposé sur une seconde face de la première membrane (54), comprenant
c1) une seconde couche d'écoulement (66) pour l'acheminement d'un gaz humide, comprenant une pluralité de canaux d'écoulement (64) s'étendant parallèlement à la première membrane (54), ainsi que
c2) deux films de maintien (74) adjacents sur les deux faces à la seconde couche d'écoulement (66), lesquels films présentent une pluralité d'ouvertures traversantes (76),
d) une seconde membrane (54) perméable à la vapeur d'eau qui est disposée sur la face opposée à la première membrane (54) du second ensemble de couches (58),
**caractérisé en ce que**
les films de maintien (74) sont fermés par leur périphérie extérieure, respectivement par une périphérie extérieure de la seconde couche d'écoulement (66) et des membranes (54).

2. Dispositif d'humidification (50) selon la revendication 1, **caractérisé en ce que** les films de maintien (74) présentent, au moins dans une région (78) active présentant des ouvertures traversantes (76), une surface libre dans la plage de 30 à 80 %, en particulier dans la plage de 40 à 70 %, de préférence dans la plage de 55 à 65 %.

3. Dispositif d'humidification (50) selon la revendication 1 ou 2, **caractérisé en ce que** les ouvertures traversantes (76) des films de maintien (74) présentent une forme circulaire avec des diamètres de 1 mm au maximum, en particulier de 700 µm au maximum, de préférence de 400 µm au maximum.

4. Dispositif d'humidification (50) selon l'une quelconque des revendications précédentes, **caractérisé en ce que** le premier ensemble de couches (56) comprend en outre
b2) deux films espaceurs (68) adjacents sur les deux faces à la première couche d'écoulement (60), lesquels présentent une région de bord périphérique (70) et au moins un évidement (72) central délimité par la région de bord périphérique (70).

5. Dispositif d'humidification (50) selon l'une quelconque des revendications précédentes, **caractérisé en ce que** les films de maintien (74) et/ou les films espaceurs (68) présentent indépendamment les uns des autres une épaisseur de couche dans la plage de 20 à 120 µm, en particulier dans la plage de 30 à 100 µm, de préférence dans la plage de 40 à 60 µm.

6. Dispositif d'humidification (50) selon l'une quelconque des revendications précédentes, **caractérisé en ce que** les canaux d'écoulement (64) de la première couche d'écoulement (58) et les canaux d'écoulement (64) de la seconde couche d'écoulement (60) s'étendent dans des directions s'entrecroisant.

7. Dispositif d'humidification (50) selon l'une quelconque des revendications précédentes, **caractérisé en ce que** les canaux d'écoulement (64) de la première et/ou seconde couche d'écoulement (58, 60) sont ouverts sur les deux faces et sont formés par une pluralité de barrettes d'écoulement (62) s'étendant à distance les unes des autres.

8. Dispositif d'humidification (50) selon l'une quelconque des revendications précédentes, **caractérisé en ce qu'**au moins les composants du premier ensemble de couches (56) et/ou les composants du second ensemble de couches (58) sont assemblés les uns aux autres, en particulier par respectivement une couche de colle (82, 86) adjacente sur les deux faces à la couche d'écoulement (58, 60).

9. Dispositif d'humidification (50) selon l'une quelconque des revendications précédentes, **caractérisé en ce que** les composants répétitifs ne comprennent pas de couche poreuse d'un milieu diffusant.

10. Dispositif d'humidification (50) selon l'une quelconque des revendications précédentes, **caractérisé en ce que** l'empilement (52) des composants répétitifs est agencé dans un boîtier qui est conçu pour relier la pluralité de premières couches d'écoulement (58) à une conduite d'amenée de gaz de procédé (30, 44) d'une pile à combustible (12) et pour relier la pluralité de secondes couches d'écoulement (60) à une conduite d'échappement de gaz (34, 48) d'une pile à combustible (12).

11. Ensemble de piles à combustible (10) comprenant un empilement de piles à combustibles (12) avec une pluralité de tronçons de cathodes et une pluralité de tronçons d'anodes, une alimentation de gaz de procédé anodique (28) et une alimentation de gaz de procédé cathodique (42), dans lequel l'alimentation de gaz de procédé cathodique (42) et/ou l'alimentation de gaz de procédé anodique (28) comprend un dispositif d'humidification (50) selon l'une des revendications 1 à 10 pour l'humidification d'un gaz de procédé cathodique et/ou d'un gaz de procédé anodique.
